# EUROPEAN PATENT APPLICATION

(11) **EP 1 512 565 A1**
(43) Date of publication of application: **09.03.2005**
(21) Application number: 04020145.1
(22) Date of filing: 25.08.2004
(51) Int. Cl.: B60H 1/32

(54) **Refrigerating apparatus for use in a refrigerator car**

(30) Priority: 08.09.2003 JP 2003315565
(71) Applicant: Toshiba Carrier Corporation, Tokyo 105-8001 (JP)
(72) Inventor: Okamoto, Hiroshi, Ihara-gun Shizuoka-ken (JP); Eda, Masaru, Chigasaki-shi Kanagawa-ken (JP); Shirai, Koji, Fuji-shi Shizuoka-ken (JP); Ide, Yuuichi, Fuji-shi Shizuoka-ken (JP); Toyoda, Masaki, Numazu-shi Shizuoka-ken (JP); Yamashita, Tetsuji, Fuji-shi Shizuoka-ken (JP); Morimoto, Toshiyuki, Fuji-shi Shizuoka-ken (JP)
(74) Representative: Wenning, Ekkehard

(57) **Abstract**

A compressor (31) and a condenser (32) are provided above a cab (2). An evaporator (34) is provided in an inner upper region of a refrigeration container (4). The compressor (31) is connected to the condenser (32) by a refrigerating cycle pipe (13).

## Description

The present invention relates to a refrigerating apparatus for use in a refrigerator car, which is provided with a generator, and drives a compressor by using the output of the generator to cool the inside of a refrigeration container, the generator being driven by an engine to generate electricity.

Conventionally, a refrigerator car is provided which includes a generator to be driven to generate electricity, and drives a compressor by using the output of the generator to cool the inside of a refrigeration container. Above the roof of a cab of the refrigerator car, a condenser is provided. In the refrigeration container, an evaporator is provided. A refrigerant discharged from the compressor circulates through the evaporator and the condenser. Due to this circulation of the refrigerant, the inside of the refrigeration container is cooled.

The refrigeration container is provided on a bed of the car. Under the bed, a heavy compressor is provided. The evaporator is provided in an upper region of the inside of the refrigeration container. Therefore, a refrigerating cycle pipe connecting the compressor, the evaporator and the condenser, as disclosed in, Jpn. Pat. Appln. KOKAI Publication No. 2001-324254, is extended from the compressor located under the bed to the condenser above the roof of the cab. Then, it is guided from the condenser into the refrigeration container, and is connected to the evaporator therein. Further, the pipe is extended from the evaporator downwards, and is then connected to the compressor.

In such a manner, the refrigerating cycle pipe is extended upwards and downwards over a long distance. Thus, the heat loss of the refrigerating cycle pipe is large. When the heat loss is large, the operation efficiency lowers. Accordingly, the amount of refrigerant which is to be provided in the refrigerating cycle pipe must be increased, and as a result the cost is increased. In addition, at the time of manufacturing a refrigerating apparatus, workers must extend the refrigerating cycle pipe over a long distance in the above manner, thus increasing the load on workers.

The object of the present invention is to a refrigerating apparatus for use in a refrigerator car, in which a refrigerating cycle pipe can be shortened, thereby reducing the loss of heat from the refrigerating cycle pipe, and also reducing the amount of refrigerant to be provided in the refrigerating cycle pipe. As a result, according to the present invention, the cost is reduced, and the load on workers is reduced when the refrigerating apparatus is manufactured.

The refrigerating apparatus for use in the refrigerator car, according to the present invention, the refrigerator car including a refrigeration container located in the rear of a cab, comprises:
a generator to be driven by an engine provided in the refrigerator car;
a converter configured to convert an output of the generator into a direct current;
an inverter configured to convert an output of the converter into an alternating current;
a compressor to be operated by an output of the inverter, the compressor being provided above the cab;
a condenser provided above the cab;
an evaporator provided in the refrigeration container; and
a refrigerating cycle pipe configured to return a refrigerant discharged from the compressor to the compressor through the condenser and the evaporator.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a plan view of the structure of a refrigerator car according to an embodiment of the present invention.
FIG. 2 is a side view of the structure of the refrigerator car according to the embodiment of the present invention.
FIG. 3 is a view specifically showing the structure of a condensing unit in the embodiment of the present invention.
FIG. 4 is a block diagram of a control circuit in the embodiment of the present invention.
FIG. 5 is a view showing a relationship in connection between communication lines and driving control sections in the embodiment of the present invention.
FIG. 6 is a view for use in explaining a release control of power in the embodiment of the present invention.
FIG. 7 is a plan view showing a structure according to another embodiment of the present invention.

An embodiment of the present invention will be explained with reference to the accompanying drawings.

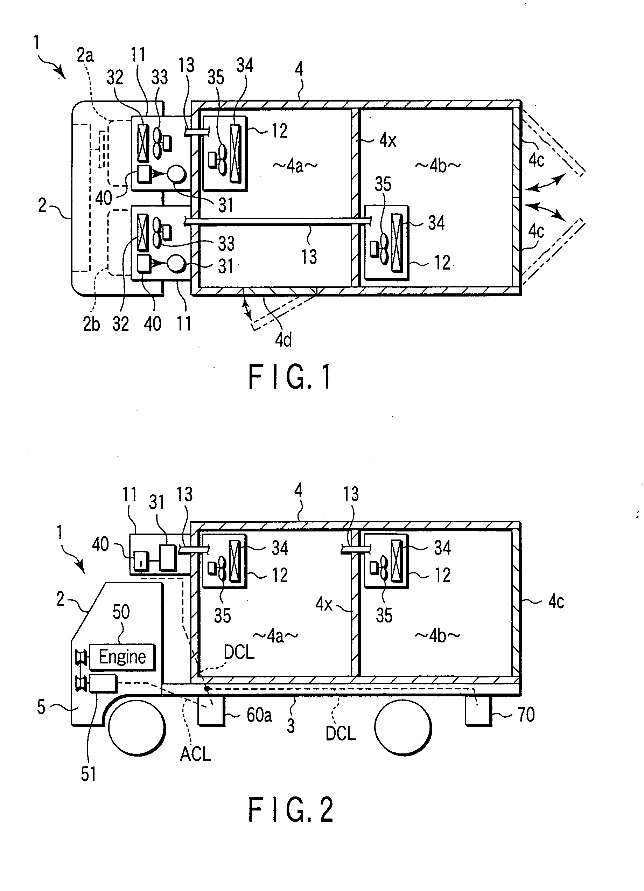

FIG. 1 is a plan view of the structure of a refrigerator car according to an embodiment of the present invention, and FIG. 2 is a side view of the structure of the refrigerator car.

According to the embodiment, a refrigerator car 1 is provided with a cab 2 and a bed 3 which is located in the rear of the cab 2. On the bed 3, a refrigeration container 4 is mounted. The inside of the refrigeration container 4 is partitioned into a freezing room 4a (whose temperature is set at -20°C) and a refrigerating room 4b (whose temperature is set at 0°C to 8°C) by a partition wall 4x. The refrigerating room 4b is located in the rear of the freezing room 4a, and is closed by openable doors 4c, 4c provided at a rear portion of the refrigeration container 4. The freezing room 4a is closed by an openable door 4d provided at a side wall of the refrigeration container 4. In upper regions of the freezing room 4a and the refrigerating room 4b, respective evaporating units 12 are provided. Above the roof of the cab 2, two condensing units 11 are provided. The condensing units 11 are held at an upper portion of a front wall of the refrigeration container 4.

The condensing units 11 contain compressors 31, condensers 32, fans 33 for condenser and inverters 40, respectively. The evaporating units 12 contain an evaporators 34 and fans 35 for evaporator, respectively. The compressors 31, the condensers 32 and the evaporators 34 are connected by refrigerating cycle pipes 13, respectively, thereby providing two refrigerating cycles. To be more specific, refrigerants discharged from the compressors 31 pass through the condensers 32 and the evaporators 34, and are then taken in by the compressors 31, thereby cooling the freezing room 4a and the refrigerating room 4b. Each of the inverters 40 converts the output of a converter 60b which will be described later into an AC power for driving the associated compressor 31 and an AC power for driving the associated fan 33 for condenser.

An engine room 5 is provided in a lower region of the cab 2, and contains an engine 50 serving as a driving source for the refrigerator car 1 and a generator 51 for generating electricity upon reception of a force generated by the engine 50.

A converter unit 60a is provided close to the generator 51 in such a manner as to hang from a lower portion of the refrigerator car 1, e.g., the bed 3. The converter unit 60a contains the converter 60b, and is connected to an output terminal of the generator 51 by an alternating-current line ACL, and a three-phase alternating voltage (approximately 200V) of the alternating-current line ACL is converted into a direct current of approximately 280V by the converter 60b. Direct-current lines DCL are connected from the converter units 60a to the inverters 40, respectively.

A Charge and discharge battery unit 70 is provided to hang from a lower portion of the refrigerator car 1, e.g., a rear portion of the bed 3. The battery unit 70 is connected to the direct-current lines DCL provided between the converter 60b in the converter unit 60a and the inverters 40. The output voltages of the battery units are set at approximately DC 220V.

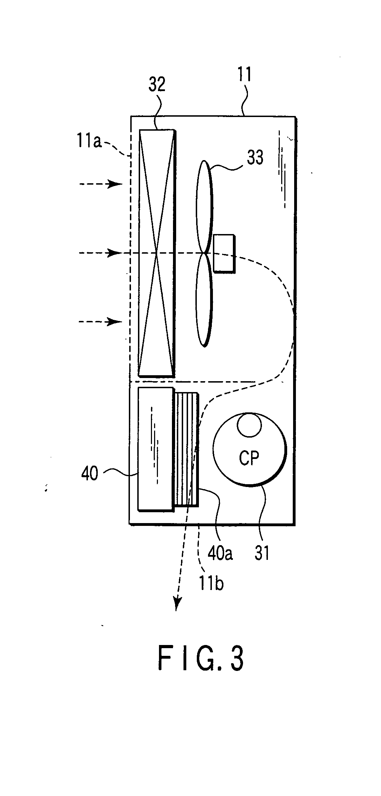

FIG. 3 specifically shows the internal structure of each of the condensing units 11.

In the condensing unit 11 provided above a passenger seat 2b in the cab 2, the condenser 32 and the fan 33 for condenser are arranged close to a side located above a driver's seat 2a in the cab 2, and the compressor 31 is located close to a side opposite to the side located above the driver's seat 2a. As shown in FIG. 1, the positional relationship between the condenser 32, the fan 33 and the compressor 31 in the condensing unit 11 provided above the driver's seat 2a is the same as that between the condenser 32, the fan 33 and the compressor 31 in the passenger seat 2b in the cab 2. Needless to say, when driving the refrigerator car, a driver sits on the driver's seat 2a, but no person may sit on the passenger seat 2b. Accordingly, in the condensing unit 11 provided above the driver's seat 2a, the compressor 31 is located close to the side located above the passenger seat 2b, since the compressor 31 is heavy. By virtue of this structural feature, the weight balance of the refrigerator car 1 in the lateral direction thereof is adjusted. As a result, the traveling stability of the refrigerator car 1 is improved, as compared with a conventional refrigerator car. Furthermore, the inverters 40 include heatsinks 40a for radiation which are located close to the compressors 31.

Furthermore, each condensing unit 11 includes an air inlet 11a in a front surface of each condensing unit 11 on a side which corresponds to the front portion of the refrigerator car 1, and an air outlet 11b in a side surface of each condensing unit 11. The condenser 32 is located close to the air inlet 11a, and the fan 33 for condenser is located in the rear of the condenser 32. When the refrigerator car 1 is driven, and the fan 33 is operated, the outside air flows into the air inlet 11a of each condensing unit 11 as indicated by dashed arrows in FIG. 3. In each condensing unit 11, the outside air passes through the condenser 32 and the fan 33, and then passes space between the compressor 31 and the heatsink 40a. Thereafter, it flows from each condensing unit 11 through the air outlet 11b in the side surface thereof. Due to the above flowing of the outside air, the radiation efficiency of the heatsink 40a is improved.

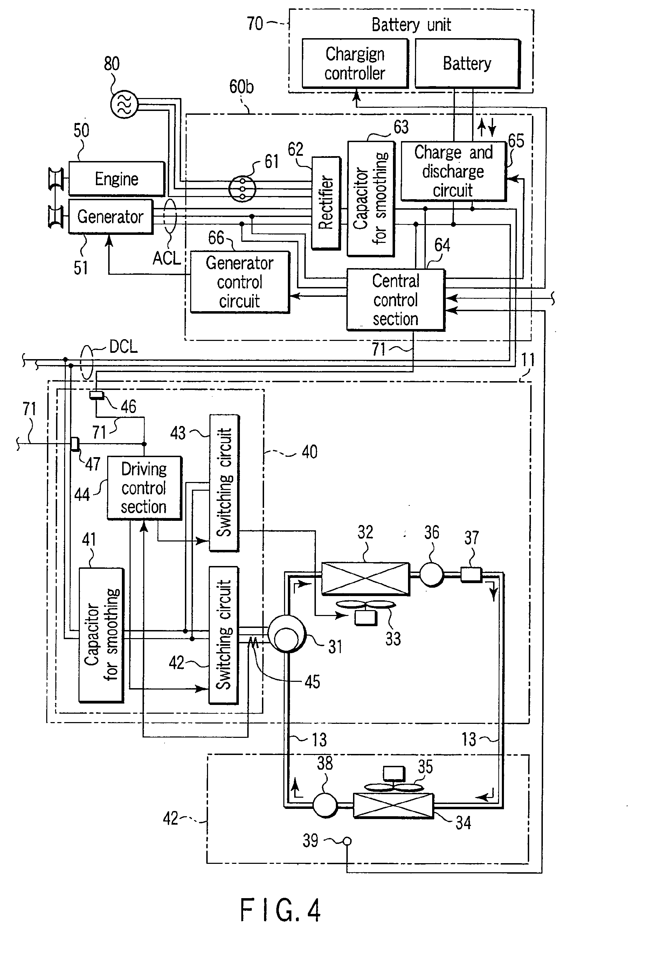

In such a manner, the refrigerating apparatus for use in the refrigerator car, according to the present invention, comprises the condensing units 11, the evaporating units 12, the generator 51, the converter unit 60a and the battery unit 70, etc. FIG. 4 shows a control circuit of the refrigerating apparatus for use in the refrigerator car.

The output of the generator 51 is supplied to the converter 60b in the converter unit 60a via the alternating-current line ACL. In the converter 60b, the alternating voltage of the alternating-current line ACL is rectified by a rectifier 62, and the rectified alternating voltage is applied to the direct-current line DCL through a capacitor 63 for smoothing. To the direct-current line DCL, a central control section (central control substrate) 64 in the converter 60b is connected, and the battery unit 70 is also connected through a charge and discharge circuit 65 in the converter 60b. The battery unit 70 includes a battery and a charging controller.

The central control section 64 comprises a microcomputer and peripheral circuits thereof, and controls the charging controller and the charge and discharge circuit 65. The central control section 64 is connected to the alternating-current line ACL, and detects the voltage of the alternating-current line ACL. To the central control section 64, a generator control circuit 66 is connected. The generator control circuit 66 controls the output voltage of the generator 51 in accordance with the voltage detected by the central control section 64. The charge and discharge circuit 65 charges/discharges the battery unit 70 in response to a command from the central control section 64. Due to this charging/discharging operation, even at an idling stopping time when the engine 50 stops, a cooling operation being performed in the refrigeration container 4 can be continued by using the power of the battery unit 70.

To an inputting side of the rectifier 62, an electric outlet 61 is connected. The electric outlet 61 can be connected to the three-phase alternating-current power supply 80 as occasion arises. When the three-phase alternating-current power supply 80 is connected to the electric outlet 61, a direct-current voltage is output from the rectifier 62. The inverters 40 are connected to the direct-current lines DCL connected to the converter 60b. In each of the inverters 40, the voltage of the direct-current line DCL is applied to switching circuits 42 and 43 through a capacitor 41 for smoothing as direct-current voltages. The switching circuit 42 converts the direct-current voltage applied through the capacitor 41 into a three-phase alternating-current voltage of a predetermined frequency due to high-frequency switching based on pulse width modulation in response to a command from a driving control section 44. In such a manner, when the three-phase alternating-current voltage is output, the motor of a compressor 31 is driven. When the compressor 31 is driven, current flowing in the motor of the compressor 31 is detected by a current sensor 45, and data indicating the result of this detection is sent to the driving control section 44. Also, the switching circuit 43 converts the direct-current voltage applied through the capacitor 41 into a three-phase alternating-current voltage of a predetermined frequency due to high frequency switching based on pulse width modulation in response to a command from the driving control section 44, and outputs the three-phase alternating-current voltage. The motor of the associated fan 33 is driven by the output of the three-phase alternating-current voltage.

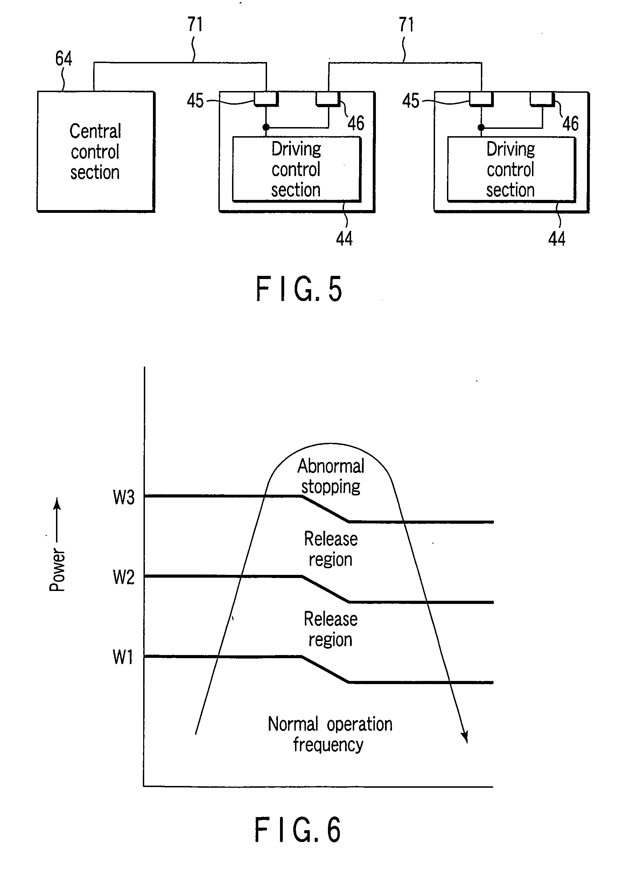

A communication line 71 is extended from the central control section 64 of the converter 60b, and is connected to the drive control section 44 of each of the inverters 40 through two connectors 46 and 47 of each inverter 40. The relationship in connection between the communication line 71 and the driving control sections 44 is shown in FIG. 5.

The central control section 64 successively performs addressing by using the communication line 71, and controls the driving control sections 44 separately, thereby controlling the output frequencies of the switching circuits 42 and 43 in each inverter 40. It should be noted that in order to control the output frequencies of the switching circuits 42 and 43, the temperatures of the freezing room 4a and refrigerating room 4b of the refrigeration container 4 are detected, and data on the detected temperatures is supplied to the central control section 64.

In each of the refrigerating cycles between the condensing units 11 and the evaporating units 12, the refrigerant discharged from the compressor 31 is supplied to the condenser 32, and the refrigerant flowing out therefrom is supplied to the evaporator 34 through a receiver tank 36 and a dryer 37. Then, the refrigerant passing through the evaporator 34 is taken in by the compressor 31 through an accumulator 38.

As stated above, the compressors 31 are contained in the condensing units 11 located above the cab 2, as a result of which the lengths of the refrigerating cycle pipes 13 between the compressor 31 and the condensers 32 can be greatly shortened, as compared with the case where the compressors are provided under the cab as in the conventional refrigerator car.

When the lengths of the refrigerating cycle pipes 13 are shortened in the above manner, the following advantages are obtained:

First, the heat loss is reduced, thus improving the operation efficiency. Second, the cost is also reduced, since it is not necessary to increase the amount of the refrigerants provided in the refrigerating cycle pipes 13. Third, at the manufacturing time, workers do not need to extend the refrigerating pipes 13 over a long distance. Thus, the load on the workers is reduced.

In general, it may be considered that if the heavy compressors 31 are provided above the cab 2, the refrigerator car 1 is unbalanced in weight in the lateral direction, and as a result the driving stability of the refrigerator car 1 may be lowered. However, in the present invention, in the condensing unit 11 provided above the passenger seat 2b in the cab 2, the condenser 32 and the fan 33 for condenser are arranged close to the side located above the driver's seat 2a in the cab 2, and the compressor 31 is located close to the side opposite to the side located above the driver's seat 2a. In the condensing unit 11 provided above the driver's seat 2a, as shown in FIG. 1, the positional relationship between the condenser 32, the fan 33 and the compressor 31 is the same as that between the condenser 32, the fan 33 and the compressor 31 in the passenger seat 2b in the cab 2. As a result, the balance of the refrigerator car 1 in weight in the lateral direction thereof is adjusted, thus maintaining the good traveling stability of the refrigerator car 1.

Furthermore, the pipes between the inverters 40 and the compressors 31 are shortened, as compared with the conventional refrigerator car, since the inverters 40 and the compressors 31 are contained together in the condensing units 11, respectively. Therefore, though the inverters 40 output high-frequency voltages due to high-frequency switching, the present invention prevents an adverse effect which would be caused by a high-frequency noise (which is also called radio noise), since the pipes are short as stated above.

Moreover, power for driving the fans 33 for condenser can be obtained from the inverters 40. Thus, it is not necessary to provide power lines specific for the fans 33. Therefore, the wiring in the refrigerator car 1 is simplified. Further, as the motors of the fans 35 for evaporator, direct-current motors are used which are operated by direct-current constant voltages of approximately 24V.

As described above, the alternating-current line ACL is connected between the generator 51 in the engine room 51 and the converter unit 60a hanging from the bed 3. In the alternating-current line ACL, generation of noise and power loss are prevented, since the distance between the generator 51 and the converter unit 60a is small.

Also, as described above, the direct-current lines DCL are connected between the inverters 40 in the condensing units 11 and the converter unit 60a handing from the bed 3. In the direct-current lines DCL, noise generation and power loss do not easily occur.

In particular, it should be noted that the converter unit 60a is located in an intermediate position of a region in which the generator 51, the inverters 40 and the battery unit 70 are located. Thus, the alternating-current lines ACL and the direct-current lines DCL are shortened, as compared with the conventional refrigerator car. Therefore, with respect to the noise generation and power loss, the present invention has a remarkable advantage over the conventional refrigerator car. In addition, power supply to the inverters 40 can be achieved by only one converter 60b, thus reducing the number of parts of the control circuit, and also the cost thereof.

The voltage of the charged battery unit 70 can be utilized as driving power, when the engine 50 stops. In addition, the battery unit 70 is located at a rear portion of the bed 3, and thus the weight balance of the cab 2 in the lateral direction is not worsened.

Further, the central control section 64 in the converter 60b controls the driving control sections 44 of the inverters 40 separately. Thus, only the communication lines 71 are provided as communication means between the central control section 64 and the inverters 40. Therefore, the number of lines of the wiring in the present invention is small, thus simplifying the structure, and reducing the cost.

In addition, current flowing in the motor of each of the compressors 31 is detected by the current sensor 45, and data indicating the result of this detection is sent to the central control section 64 through the driving control section 44. The central control section 64 calculates the values of operating powers of the compressors 31, and performs such a release control of power as shown in FIG. 6. That is, the output frequencies of the switching circuits 42 in the inverters 40 (the operation frequencies of the compressors 31) are controlled such that the value of the operating power of each compressor 31 falls within a predetermined value. This release control can prevent abnormal stopping of each compressor 31, thus improving the reliability.

In the embodiment, as described above, the refrigeration container 4 is partitioned into two rooms, and the front one of the rooms serves as the freezing room 4a, and the rear one serves as the refrigerating room 4b. However, the front room can be used as a refrigerating room 4a, and the rear room can be used as a freezing room 4b.

A so-called 3-shunt system of vector control can be adopted as a switching control method of the switching circuit 43 of each inverter 40. In the 3-shun system of vector control, a winding current of the motor of the fan 33 for condenser is detected to determine the position of the rotor of the motor, and switching control is carried out based on the result of the above detection. Therefore, an element for magnetically detecting the position of the rotor of the motor, e.g., a Hall device, is not needed. This also simplifies the structure, and reduces the cost.

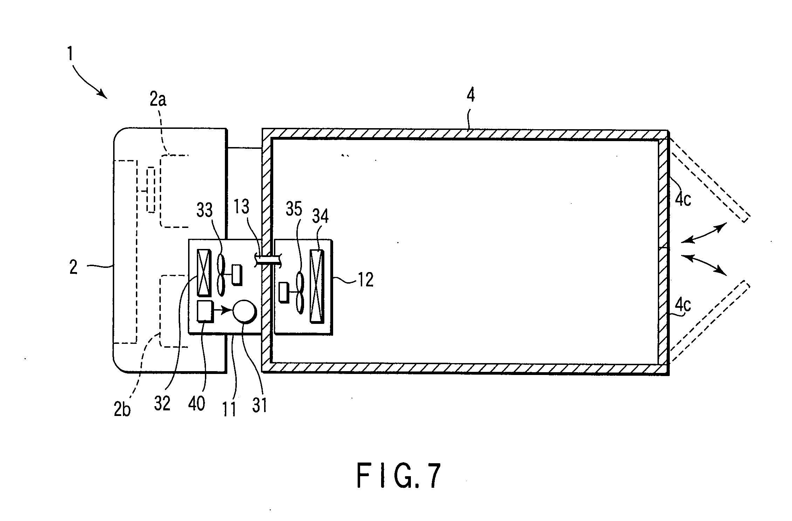

Moreover, in the above embodiment, the two condensing units 11 are provided above the cab 2. However, the structure may be modified such that only one condensing unit 11 is provided above the cab 2 as shown in FIG. 7. In the case, the entire inner space of the refrigeration container 4 is cooled by one evaporating unit 12 connected to the condensing unit 11 by a pipe. Also, it should be noted that the condensing unit 11 which contains the heavy compressor 31 is located close to the side located above the passenger seat 2b. Accordingly, the weight balance of the refrigerator car 1 in the lateral direction is not worsened.

## Claims

1. A refrigerating apparatus for use in a refrigerator car including a refrigeration container located in the rear of a cab, **characterized by** comprising:
a generator to be driven by an engine provided in the refrigerator car;
a converter configured to convert an output of the generator into a direct current;
an inverter configured to convert an output of the converter into an alternating current;
a compressor to be operated by an output of the inverter, the compressor being provided above the cab;
a condenser provided above the cab;
an evaporator provided in the refrigeration container; and
a refrigeration cycle pipe configured to return a refrigerant discharged from the compressor to the compressor through the condenser and the evaporator.

2. The apparatus according to claim 1, **characterized in that** the converter is provided under the refrigerator car, and the inverter are provided above the cab.

3. The apparatus according to claim 1, **characterized by** further comprising a charge and discharge battery unit which is connected to a direct-current line between the converter and the inverter, and is provided under the refrigerator car.

4. The apparatus according to claim 1, **characterized by** further comprising:
a first smoothing capacitor configured to smooth an output of the converter; and
a second smoothing capacitor configured to smooth an input to be input to the inverter.

5. The apparatus according to claim 1, **characterized in that** the compressor is provided above the cab, and is located close to a side located above a passenger seat in the cab.

6. The apparatus according to claim 1, **characterized by** further comprising:
a radiation heatsink provided at the inverter;
a fan for condenser which is configured to make outside air flow to the condenser, and is provided above the cab; and
a condensing unit containing the compressor, the condenser, the inverter and the fan for condenser.

7. The apparatus according to claim 6, **characterized in that** the condensing unit is formed to make the outside air flowing in the condensing unit flow to the condenser and the fan for condenser, and then flow out from the condensing unit after flowing through space between the compressor and the heatsink.

8. A refrigerating apparatus for use in a refrigerator car including a refrigeration container located in the rear of a cab, **characterized by** comprising:
a generator to be driven by an engine provided in the refrigerator car;
a converter configured to convert an output of the generator into a direct current;
a plurality of inverters configured to convert an output of the converter into an alternating current;
a plurality of compressors to be operated by outputs of the inverters, respectively, the compressors being provided above the cab;
a plurality of condensers provided above the cab;
a plurality of evaporators provided in the refrigeration container; and
a plurality of refrigerating cycle pipes configured to return refrigerants discharged from the compressors to the compressors through the condensers and the evaporators, respectively.

9. The apparatus according to claim 8, above the cab.

10. The apparatus according to claim 8, **characterized by** further comprising a charge and discharge battery unit connected to direct-current lines between the converter and the inverters, and provided under the refrigerator car.

11. The apparatus according to claim 8, **characterized by** further comprising:
a charge and discharge battery unit connected to direct-current lines between the converter and the inverters; and
a central control section configured to control output frequencies of the inverters separately.

12. The apparatus according to claim 8, **characterized by** further comprising:
a first smoothing capacitor configured to smooth the output of the converters; and
a plurality of second smoothing capacitors configured to smooth inputs to be input to the inverters.

13. The apparatus according to claim 8, **characterized in that** the compressors are provided above the cab, and one of the compressors is located above a passenger seat in the cab, and the other is located close to a side located above the passenger seat.

14. The apparatus according to claim 8, **characterized by** further comprising:
a plurality of radiation heatsinks provided at the inverters;
a plurality of fans for condenser which are configured to make outside air flow to the condensers, and are provided above the cab; and
a plurality of condensing units containing the compressors, the condensers, the inverters and the fans for condenser.

15. The apparatus according to claim 8, **characterized in that** the condensing unit is formed to make the outside air flowing in the condensing unit flow to the condenser and the fan for condenser, and then flow out from the condensing unit after flowing through space between the compressor and the heatsink.
